# EUROPÄISCHE PATENTSCHRIFT

(11) **EP 3 408 790 B1**
(45) Veröffentlichungstag und Bekanntmachung des Hinweises auf die Patenterteilung: **07.05.2025**
(21) Anmeldenummer: 17700827.3
(22) Anmeldetag: 19.01.2017
(51) Int. Cl.: G06V 40/13, G06V 40/40, G06V 40/14

(54) **AUTHENTIFIKATIONSVORRICHTUNG ZUM AUTHENTIFIZIEREN EINER PERSON**
AUTHENTICATION APPARATUS FOR AUTHENTICATING A PERSON
DISPOSITIF D'IDENTIFICATION D'UNE PERSONNE

(30) Priorität: 29.01.2016 DE 102016101607
(43) Veröffentlichungstag der Anmeldung: 05.12.2018
(73) Patentinhaber: Bundesdruckerei GmbH, 10969 Berlin (DE)
(72) Erfinder: WOLF, Andreas, 13158 Berlin (DE); KULIKOVSKA, Olga, 14165 Berlin (DE); KULIKOVSKI, Lazar, 14165 Berlin (DE); PAESCHKE, Manfred, 16348 Wandlitz (DE)
(74) Vertreter: Patentship Patentanwaltsgesellschaft mbH
(86) Internationale Anmeldenummer: PCT/EP2017/051034
(87) Internationale Veröffentlichungsnummer: WO 2017/129462

(56) Entgegenhaltungen:
- DE-A1- 102008 039 643
- US-A1- 2010 168 585
- US-B2- 8 326 004
- "Information technology - Biometric System-on-Card - Part 1: Core requirements", ISO/IEC 17839-1, July 2014 (2014-07-01), Geneva, Switzerland, pages 1 - 6, XP082007222
- BARUN V V ET AL: "Absorption spectra and light penetration depth of normal and pathologically altered human skin", JOURNAL OF APPLIED SPECTROSCOPY, KLUWER ACADEMIC PUBLISHERS-PLENUM PUBLISHERS, vol. 74, no. 3, May 2007 (2007-05-01), pages 430 - 439, XP019552571, ISSN: 1573-8647, DOI: 10.1007/S10812-007-0071-2
- KLAUS HINSCH: "Lasergranulation", PHYSIK IN UNSERER ZEIT, vol. 23, no. 2, March 1992 (1992-03-01), pages 59 - 66, XP055363267
- "Identification cards -- Physical characteristics", ISO/IEC 7810:2003, IEC, 3, RUE DE VAREMBÉ, PO BOX 131, CH-1211 GENEVA 20, SWITZERLAND, 31 January 2003 (2003-01-31), pages 1 - 11, XP082008935

## Beschreibung

Die vorliegende Erfindung betrifft eine Authentifikationsvorrichtung zum Authentifizieren einer Person.

Die Druckschrift US 8 326 004 B2 offenbart eine Kreditkarte, in der eine Fingerabdruckerkennungsvorrichtung verbaut ist. Die Fingerabdruckerkennungsvorrichtung enthält eine Infrarotlichtquelle und einen Bildsensor, der mittels reflektierten Infrarotlichts ein Fingerabdruckmuster erfasst und das erfasste Fingerabdruckmuster mit einem Referenzfingerabdruckmuster vergleicht.

Die Offenlegungsschrift DE 10 2008 039643 A1 beschreibt ein Verfahren und eine Vorrichtung zur interferometrischen Messung dreidimensionaler biometrischer Merkmale in Haut.

Die Offenlegungsschrift US 2010/0168585 A1 beschreibt eine Authentifikationsvorrichtung, welche eine Fingerbeere mit Laserlicht im nahen Infrarotbereich bestrahlt und ein durch Reflektion am subkutanen Gewebe erhaltenes Laserspeckle-Muster mit einem Bildsensor aufzeichnet.

Die Druckschrift "Information technology - Biometric System-on-Card - Part 1: Core requirements", ISO/IEC 17839-1, Juli 2014 (2014-07), Seiten 1-6, Genf, Schweiz, beschreibt ein tragbares Gerät in Kartengröße mit Vorrichtungen zur biometrischen Erfassung, zur Datenverarbeitung, zur Speicherung und zum biometrischen Vergleich. Durch die physische und logische Integration des Sensors und Signalverarbeitung in die Karte kann der biometrische Vergleich auf der Karte stattfinden.

Die Druckschrift BARUN V V ET AL: "Absorption spectra and light penetration depth of normal and pathologically altered human skin", JOURNAL OF APPLIED SPECTROSCOPY, Bd. 74, Nr. 3, Mai 2007 (2007-05), Seiten 430-439, DOI: 10.1007/S10812-007-0071-2 beschäftigt sich mit dem Eindringen von Licht in menschliche Haut und die sich daraus ergebenden Absorptionsspektren.

Die Druckschrift "KLAUS HINSCH: "Lasergranulation"; Physik in unserer Zeit/23. Jahrg. 1992/Nr. 2, VCH Verlagsgesellschaft mbH" beschäftigt sich mit der Lasergranulation.

Ein Identifikationsdokument, wie eine ID-Karte oder eine Smartcard, ist häufig einer Person zugeordnet und kann zum Authentifizieren der Person verwendet werden. Hierbei kann die Zuordnung des Identifikationsdokuments zu der Person über Wissen, Besitz oder Sein erfolgen. Beispielsweise ist in dem Identifikationsdokument ein biometrisches Referenzmerkmal der Person gespeichert, welches mittels einer Authentifikationsvorrichtung mit einem biometrischen Merkmal der Person verglichen wird. Die Authentifikationsvorrichtung kann eine externe Vorrichtung, welche das biometrische Referenzmerkmal aus dem Identifikationsmerkmal ausliest, oder eine in dem Identifikationsdokument integrierte Vorrichtung sein.

Ferner kann die Authentifikationsvorrichtung einen Sensor zum Erfassen des biometrischen Merkmals der Person aufweisen. Beispielsweise ist das biometrische Merkmal der Person ein Fingerabdruck und der Sensor ein Fingerabdrucksensor, insbesondere ein kapazitiver oder thermischer Halbleitersensor. Derartige Halbleitersensoren geben ein Signal aus, welches häufig als ein Bild interpretiert wird.

Aus dem Bild können zur Unterscheidung von Fingern verwendbare Elemente, beispielsweise Minutien, extrahiert werden.

Ist die Authentifikationsvorrichtung in dem Identifikationsdokument integriert, so weist das Identifikationsdokument aufgrund des verwendeten Halbleitersensors häufig eine vergleichsweise große Dicke auf. Beispielsweise wird hierbei das Identifikationsdokument in einem Kartenformat nach dem Standard ISO 7810 ID-T gefertigt. Dies kann als unkomfortabel empfunden werden.

Ferner weist ein kapazitiver oder thermischer Halbleitersensor häufig eine vergleichsweise geringe Auflösung auf. Hierdurch kann die Leistungsfähigkeit der Authentifikationsvorrichtung reduziert sein, insbesondere bezüglich der erreichbaren biometrischen Falsch-Übereinstimmung und Falsch-Nicht-Übereinstimmung sowie der Erkennung von Angriffen auf das System mit dafür geeigneten Artefakten wie Attrappen und abgetrennten Fingern (Presentation Attack Detection).

Es ist daher die Aufgabe der vorliegenden Erfindung, eine Authentifikationsvorrichtung zu schaffen, welche kompaktere geometrische Abmessungen und eine verbesserte Erkennungsrate aufweist.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Gemäß einem ersten Aspekt betrifft die Erfindung eine Authentifikationsvorrichtung zum Authentifizieren einer Person, mit: einer Beleuchtungsquelle, welche ausgebildet ist, einen Hautbereich der Person mit einem Beleuchtungslicht in einem vorbestimmten Wellenlängenbereich zu beleuchten, in welchem das Beleuchtungslicht zumindest teilweise in den Hautbereich eindringt; einem Detektor zum Detektieren eines Detektionsbildes des Hautbereichs in dem vorbestimmten Wellenlängenbereich; und einem Prozessor zum Authentifizieren der Person auf der Basis des Detektionsbildes. Dadurch wird der Vorteil erreicht, dass die Authentifikationsvorrichtung besonders kompakte geometrische Abmessungen aufweisen kann.

Durch die Authentifizierung der Person wird die Person authentifiziert. Die Authentifizierung der Person kann eine Identifikation der Person und/oder eine Verifikation der Identität der Person umfassen.

Die Authentifikationsvorrichtung kann in einem Identifikationsdokument, wie einer ID-Karte oder einer Smartcard, integriert sein oder ein Identifikationsdokument, wie eine ID-Karte oder eine Smartcard, bilden.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Ferner kann die Authentifikationsvorrichtung ein Element eines Computers, eines Laptops, eines Mobiltelefons oder eines Smartphones sein. Beispielsweise ist die Authentifikationsvorrichtung ein Element eines Zugriffskontrollsystems oder eines Zugangskontrollsystems.

Die Beleuchtungsquelle kann einen Laser oder eine Laserdiode zum Erzeugen des Beleuchtungslichts umfassen. Der vorbestimmte Wellenlängenbereich ist ein Wellenlängenbereich im nahen Infrarot (NIR). Beispielsweise ist der Laser zur Emission von Licht mit einer Wellenlänge aus dem Bereich von 780nm bis 3000nm ausgebildet.

Der Hautbereich der Person kann einem Finger der Person zugeordnet sein. Beispielsweise ist der Hautbereich ein Abschnitt einer Fingerbeere des Fingers der Person.

Der Detektor kann zum Detektieren des Detektionsbildes einen optischen Sensor, insbesondere einen Charge-Coupled Device (CCD) Detektor, umfassen, welcher ausgebildet ist, an und/oder in dem Hautbereich reflektiertes, gebrochenes und/oder gestreutes Beleuchtungslicht zu erfassen.

Der Prozessor ist ausgebildet, ein detektiertes Specklemuster mit einem Referenz-Specklemuster Person mittels eines Mustervergleichs zu vergleichen, um die Person zu authentifizieren. Hierbei kann der Mustervergleich ein Vergleich von Bildmerkmalen, beispielsweise Ecken, Kanten, relativen Abständen, Positionen und/oder Lagen, sein. Stimmen das Muster und das Referenzmuster mit hinreichender Genauigkeit überein, so kann die Person authentifiziert werden. Das Referenzmuster kann ferner in einem Speicher der Authentifikationsvorrichtung oder in einem externen Speicher, insbesondere in einem Speicher eines Identifikationsdokumentes, gespeichert sein.

Ferner kann der Prozessor ausgebildet sein, das Referenzmuster aus dem Speicher der Authentifikationsvorrichtung auszulesen. Die Authentifikationsvorrichtung kann ferner eine Kommunikationsschnittstelle zum Auslesen des Referenzmusters aus dem externen Speicher über ein Kommunikationsnetzwerk aufweisen. Beispielsweise ist die Kommunikationsschnittstelle eine Radiofrequenzidentifikationsschnittstelle und ist das Kommunikationsnetzwerk ein Radiofrequenzidentifikationskommunikationsnetzwerk.

Die Authentifikationsvorrichtung ist mit einer Positionierungseinrichtung zur Positionierung des Hautbereichs der Person ausgebildet. Dadurch wird der Vorteil erreicht, dass ein Detektionsbild eines vorbestimmten Hautbereichs der Person erfasst werden kann. Hierbei kann die Positionierungseinrichtung aufklappbar ausgebildet sein.

Gemäß einer Ausführungsform ist der Hautbereich der Person einem Finger der Person zugeordnet, und ist die Positionierungseinrichtung eine Fingerauflage. Dadurch wird der Vorteil erreicht, dass ein Detektionsbild eines leicht zugänglichen Hautbereichs der Person detektiert werden kann.

Der vorbestimmte Wellenlängenbereich ist im nahen Infrarot-Wellenlängenbereich. Dadurch wird der Vorteil erreicht, dass auch eine subkutane Struktur des Hautbereichs analysiert werden kann.

Gemäß einer Ausführungsform ist die Beleuchtungsquelle ausgebildet, den Hautbereich entlang eines vorbestimmten Beleuchtungspfades oder entlang einer Mehrzahl von vorbestimmten Beleuchtungspfaden zu beleuchten. Dadurch wird der Vorteil erreicht, dass das Detektionsbild reproduzierbar erfasst werden kann.

Die Beleuchtungsquelle weist einen Infrarot-Laser oder eine Infrarot-Laserdiode zum Erzeugen des Beleuchtungslichts auf. Dadurch wird der Vorteil erreicht, dass der Hautbereich mittels kohärenter Strahlung beleuchtet werden kann.

Der Detektor ist ausgebildet, in dem Detektionsbild ein Specklemuster zu detektieren, um die Person zu authentifizieren. Dadurch wird der Vorteil erreicht, dass die Person durch einen Mustervergleich effizient authentifiziert werden kann.

Der Prozessor ist ausgebildet, das detektierte Muster mit einem Referenz-Specklemuster zu vergleichen, um die Person zu authentifizieren. Dadurch wird der Vorteil erreicht, dass die Person effizient authentifiziert werden kann.

Gemäß einer Ausführungsform ist das Referenzmuster der Person oder einer Referenzperson zugeordnet. Dadurch wird der Vorteil erreicht, dass die Person eindeutig authentifiziert werden kann.

Gemäß einer Ausführungsform weist der Detektor eine Mehrzahl von Detektionselementen auf, und ist der Prozessor ausgebildet, zumindest einen Bereich des Detektionsbildes einem oder mehreren Detektionselementen zuzuordnen, um eine Information über einen Ort des Bereichs des Detektionsbildes zu erhalten. Dadurch wird der Vorteil erreicht, dass mittels Detektors Ortsinformationen und/oder Phaseninformationen zu den Speckles bestimmt werden können.

Gemäß einer Ausführungsform ist der Detektor ein Zeilendetektor, ein Linsen-Array-Detektor oder ein CCD-Detektor. Dadurch wird der Vorteil erreicht, dass der Detektor besonders kompakte geometrische Abmessungen aufweisen kann.

Die Authentifikationsvorrichtung ist eine Karten-Authentifikationsvorrichtung und umfasst einen Kartenkörper, insbesondere einen Kunststoff Kartenkörper, in welchem die Beleuchtungsquelle, der Detektor und der Prozessor integriert sind. Dadurch wird der Vorteil erreicht, dass die Authentifikationsvorrichtung besonders einfach in ein Identifikationsdokument integriert werden kann.

Gemäß einem zweiten Aspekt betrifft die Erfindung ein Verfahren zum Authentifizieren einer Person, mit: Beleuchten eines Hautbereichs der Person mit einem Beleuchtungslicht in einem vorbestimmten Wellenlängenbereich, in welchem das Beleuchtungslicht zumindest teilweise in den Hautbereich eindringt; Detektieren eines Detektionsbildes des Hautbereichs in dem vorbestimmten Wellenlängenbereich; und Authentifizieren der Person auf der Basis des Detektionsbildes. Dadurch wird der Vorteil erreicht, dass eine Erkennungsrate bei der Identifikation der Person erhöht werden kann.

Das Verfahren kann mittels der erfindungsgemäßen Authentifikationsvorrichtung durchgeführt werden. Weitere Merkmale des Verfahrens ergeben sich unmittelbar aus den Merkmalen der erfindungsgemäßen Authentifikationsvorrichtung.

Gemäß einer Ausführungsform wird der Hautbereich der Person entlang eines vorbestimmten Beleuchtungspfades oder entlang einer Mehrzahl von vorbestimmten Beleuchtungspfaden beleuchtet. Dadurch wird der Vorteil erreicht, dass das Detektionsbild reproduzierbar erfasst werden kann.

Gemäß einem dritten Aspekt betrifft die Erfindung eine Verwendung der erfindungsgemäßen Authentifikationsvorrichtung, um eine Attrappe von einer Person zu unterscheiden. Die Attrappe kann eine dünnschichtige Nachbildung eines Hautbereichs aus Holzleim oder Gelatine sein. Ferner kann die Attrappe ein Objekt sein, welches eine grundsätzlich andere Struktur als ein Hautbereich ausweist. Beispielsweise ist das Objekt ein Objekt aus Alginat, Gelatine und/oder Gummi.

Die Erfindung kann in Hardware und/oder Software realisiert werden.

Weitere Ausführungsbeispiele werden Bezug nehmend auf die beiliegenden Zeichnungen näher erläutert. Es zeigen:
- Fig. 1: eine schematische Darstellung einer Authentifikationsvorrichtung;
- Fig. 2: ein schematisches Diagramm eines Verfahrens zum Authentifizieren einer Person; und
- Fig. 3: eine schematische Darstellung einer Anordnung zur Durchführung des Verfahrens zum Authentifizieren der Person.

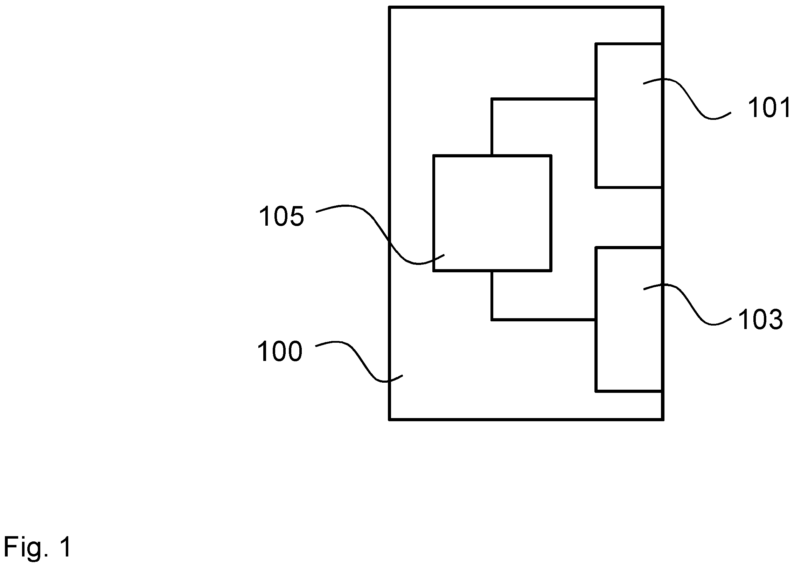

Fig. 1 zeigt eine schematische Darstellung einer Authentifikationsvorrichtung 100. Die Authentifikationsvorrichtung 100 weist eine Beleuchtungsquelle 101, einen Detektor 103 und einen Prozessor 105 auf.

Die Authentifikationsvorrichtung 100 zum Authentifizieren einer Person verfügt über eine Beleuchtungsquelle 101, welche ausgebildet ist, einen Hautbereich der Person mit einem Beleuchtungslicht in einem vorbestimmten Wellenlängenbereich zu beleuchten, in welchem das Beleuchtungslicht zumindest teilweise in den Hautbereich eindringt; dem Detektor 103 zum Detektieren eines Detektionsbildes des Hautbereichs in dem vorbestimmten Wellenlängenbereich; und dem Prozessor 105 zum Authentifizieren der Person auf der Basis des Detektionsbildes.

Durch die Authentifizierung der Person wird die Person authentifiziert. Die Authentifizierung der Person kann eine Identifikation der Person und/oder eine Verifikation der Identität der Person umfassen.

Die Authentifikationsvorrichtung 100 kann in einem Identifikationsdokument, wie einer ID-Karte oder einer Smartcard, integriert sein oder ein Identifikationsdokument, wie eine ID-Karte oder eine Smartcard, bilden.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Ferner kann die Authentifikationsvorrichtung 100 ein Element eines Computers, eines Laptops, eines Mobiltelefons oder eines Smartphones sein. Beispielsweise ist die Authentifikationsvorrichtung 100 ein Element eines Zugriffskontrollsystems oder eines Zugangskontrollsystems.

Die Beleuchtungsquelle 101 kann einen Laser oder eine Laserdiode zum Erzeugen des Beleuchtungslichts umfassen. Der vorbestimmte Wellenlängenbereich ist ein Wellenlängenbereich im nahen Infrarot (NIR). Beispielsweise ist der Laser zur Emission von Licht mit einer Wellenlänge aus dem Bereich von 780nm bis 3000nm ausgebildet. Der Hautbereich der Person kann einem Finger der Person zugeordnet sein. Beispielsweise ist der Hautbereich ein Abschnitt einer Fingerbeere des Fingers der Person.

Der Detektor 103 kann zum Detektieren des Detektionsbildes einen optischen Sensor, insbesondere einen Charge-Coupled Device (CCD) Detektor, umfassen, welcher ausgebildet ist, an und/oder in dem Hautbereich reflektiertes, gebrochenes und/oder gestreutes Beleuchtungslicht zu erfassen.

Der Prozessor 105 ist ausgebildet, in dem Detektionsbild ein Specklemuster zu detektieren und das detektierte Muster mit einem Referenzmuster der Person mittels eines Mustervergleichs zu vergleichen, um die Person zu authentifizieren. Hierbei kann der Mustervergleich ein Vergleich von Bildmerkmalen, beispielsweise Ecken, Kanten, relativen Abständen, Positionen und/oder Lagen, sein. Stimmen das Muster und das Referenzmuster mit hinreichender Genauigkeit überein, so kann die Person authentifiziert werden. Das Referenzmuster kann ferner einem Speicher der Authentifikationsvorrichtung 100 oder in einem externen Speicher, insbesondere in einem Speicher eines Identifikationsdokumentes, gespeichert sein.

Ferner kann der Prozessor 105 ausgebildet sein, das Referenzmuster aus dem Speicher der Authentifikationsvorrichtung 100 auszulesen. Die Authentifikationsvorrichtung 100 kann ferner eine Kommunikationsschnittstelle zum Auslesen des Referenzmusters aus dem externen Speicher über ein Kommunikationsnetzwerk aufweisen. Beispielsweise ist die Kommunikationsschnittstelle eine Radiofrequenzidentifikationsschnittstelle und ist das Kommunikationsnetzwerk ein Radiofrequenzidentifikationskommunikationsnetzwerk. Gemäß einer Ausführungsform kann die Authentifikationsvorrichtung 100 zum Erkennen der versuchten Bedienung mit anderen Objekten als einem lebenden Finger (Presentation Attack Detection) ausgebildet sein.

Gemäß einer weiteren Ausführungsform kann mittels der Authentifikationsvorrichtung 100 ein oder mehrere Finger erkannt werden.

Die Authentifikationsvorrichtung 100 weist eine Positionierungseinrichtung auf, die gemäß einer Ausführungsforrm die Form einer Figerablage hat. Da das mittels des Detektors 103 detektierte Detektionsbild sehr ortssensitiv sein kann, wird vorzugsweise mittels der Beleuchtungsquelle 101, wie mittels eines Lasers, ein genau vorbestimmter Pfad entlang des Hautbereichs abgelaufen. Eine derart exakte Positionierung kann durch Verwenden einer Positionierungshilfe für einen Finger erreicht werden. Ferner können mehrere nebeneinander liegende Pfade mittels der Beleuchtungsquelle 101 und des Detektors 103 erfasst werden.

Gemäß einer weiteren Ausführungsform kann die Authentifikationsvorrichtung 100 in einer besonders kleinen Bauform realisiert werden, da bereits eine sehr kleine Fläche des Hautbereichs einer Fingerbeere eines Fingers der Person, welche nur wenige Quadratmillimeter aufweist, genug Merkmale beinhalten kann, anhand derer der Finger von anderen Fingern unterschieden werden kann. Ferner kann die Authentifikationsvorrichtung 100 eine gute sogenannte "Presentation Attack Detection" Erkennung leisten. Die Authentifikationsvorrichtung 100 kann ferner einen Sensor bilden. Gemäß einer weiteren Ausführungsform kann mittels der Beleuchtungsquelle 101, wie eines Lasers, ein Pfad auf dem Hautbereich, insbesondere eines Fingers der Person, beleuchtet werden und können mittels des Detektors 103 die an verschiedenen Stellen dieses Pfades erzeugten Speckles zur Klassifikation des Hautbereichs gemessen werden.

Die Authentifikationsvorrichtung 100 bildet eine Karte.

Gemäß einer weiteren Ausführungsform können sich an der Oberfläche der Authentifikationsvorrichtung 100 der Detektor 103 und die Beleuchtungsquelle 101 befinden. Hierbei kann der Detektor 103 ein optischer Sensor oder ein CCD-Detektor mit einem Linsenarray sein. Ferner kann die Beleuchtungsquelle 101 eine Laserdiode oder eine lichtemittierende Diode (LED) sein, die so gerichtet ist, dass sie einen aufgelegten Hautbereich, insbesondere eines Fingers der Person, beleuchtet. Die Authentifikationsvorrichtung 100 kann ferner eine ausklappbare Positionierungshilfe aufweisen, mittels welcher gewährleistet werden kann, dass der Hautbereich immer genau genug auf dieselbe Weise auflegt und über den Sensor geführt wird.

Gemäß einer weiteren Ausführungsform kann die Beleuchtungsquelle 101 durch eine NIR-Laserdiode gebildet sein und/oder kann der Detektor 103 durch einen optischen Sensor gebildet sein.

Gemäß einer weiteren Ausführungsform kann die Authentifikationsvorrichtung 100 einen Wellenfront-Fingerabdrucksensor, insbesondere für Smartcards, bilden.

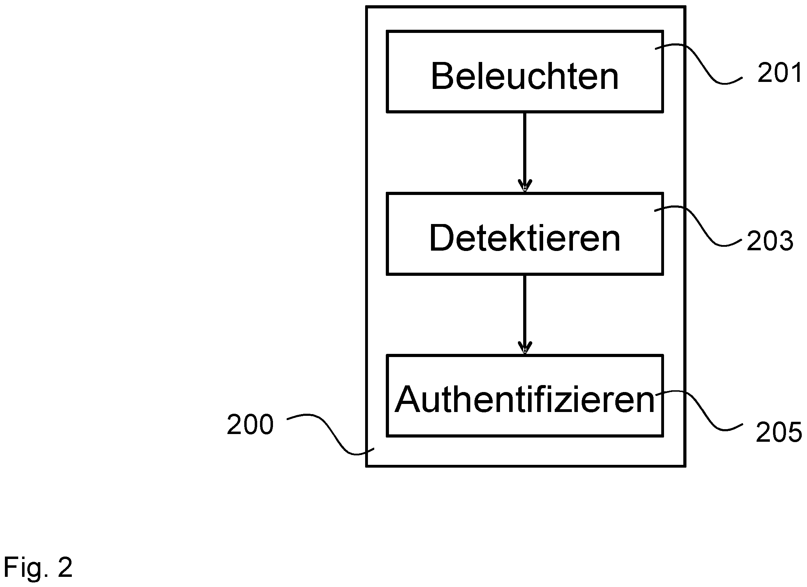

Fig. 2 zeigt ein schematisches Diagramm eines Verfahrens 200 zum Authentifizieren einer Person. Das Verfahren 200 umfasst die Verfahrensschritte 201 bis 205.

Das Verfahren 200 zum Authentifizieren einer Person umfasst die Verfahrensschritte: Beleuchten 201 eines Hautbereichs der Person mit einem Beleuchtungslicht in einem vorbestimmten Wellenlängenbereich, in welchem das Beleuchtungslicht zumindest teilweise in den Hautbereich eindringt; Detektieren 203 eines Detektionsbildes des Hautbereichs in dem vorbestimmten Wellenlängenbereich; und Authentifizieren 205 der Person auf der Basis des Detektionsbildes. Das Verfahren 200 kann mittels der Authentifikationsvorrichtung 100 durchgeführt werden.

Gemäß einer Ausführungsform kann mittels des Verfahrens 200 eine Gestalt eines kleinen Ausschnittes des Hautbereichs, wie einer Fingerbeere eines Fingers, mit einem hohem Detailgrad ausgewertet werden. Dabei werden nicht wie bei bisher bekannten Verfahren die singulären Minutien sondern die Gestalt der Oberfläche des Hautbereichs oder der Fingerbeere an sich und in bestimmtem Rahmen auch der subkutanen Struktur des Hautbereichs oder der Fingerbeere analysiert und damit die erreichbare Präzision des Verfahrens 200 deutlich erhöht.

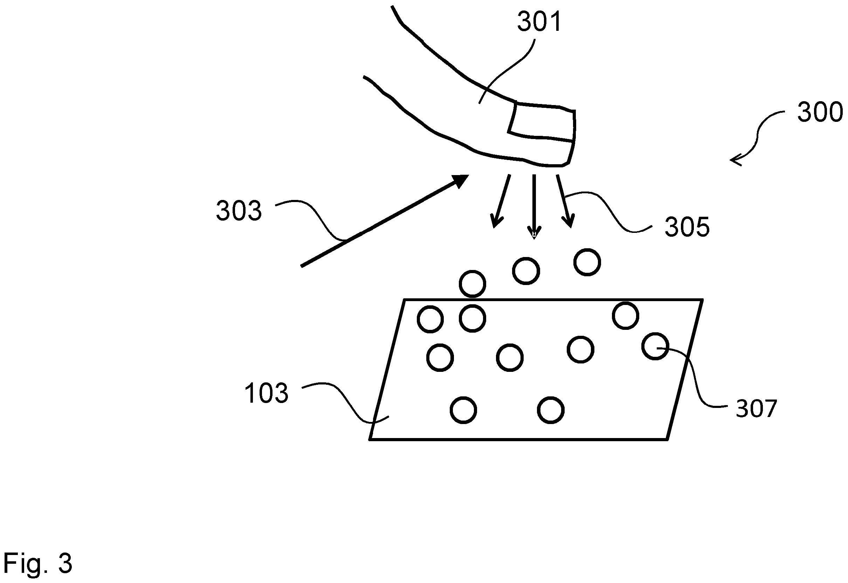

Fig. 3 zeigt eine schematische Darstellung einer Anordnung 300 zur Durchführung des Verfahrens 200 zum Authentifizieren der Person. In der Darstellung ist ein Finger 301 der Person gezeigt, welcher durch die nicht abgebildete Beleuchtungsquelle 101 mit Beleuchtungslicht 303 beleuchtet wird. Bei dem Beleuchtungslicht 303 kann es sich um von einem Laser, insbesondere von einem NIR-Laser, emittiertes Licht handeln. Ferner sind Lichtstrahlen 305 abgebildet, welche an und/oder in einem Hautbereich des Fingers 301 reflektiertes, gebrochenes und/oder gestreutes Beleuchtungslicht darstellen. Die Anordnung 300 weist ferner einen Detektor 103 zum Detektieren von durch die Lichtstrahlen 305 gebildeten Speckles 307 auf. Hierbei kann der Detektor 103 ein CCD-Detektor sein. Ferner können die Speckles 307 Specklemuster, Lichtgranulationen oder Lasergranulationen sein oder bilden.

Gemäß einer Ausführungsform kann der Finger 301 mittels des Beleuchtungslichts 303, insbesondere mittels Laser, an einer bestimmten Stelle beleuchtet werden. Die Wellenlänge des Beleuchtungslichts 303 oder des Lasers wird hierbei so gewählt, dass das Beleuchtungslicht 303 leicht in die Haut des Fingers 301 eindringt, also im nahen Infrarot-Bereich. Die von dem Finger 301 reflektierten, gebrochenen und/oder gestreuten Lichtstrahlen werden von dem Detektor 103, beispielsweise einem CCD-Sensor, erfasst. Hierfür können Ortsinformationen und Phaseninformation benutzt werden, insbesondere die Information, wo auf dem Detektor 103 die Speckles 307 landen. Aufgrund der verwendeten Wellenlänge des Beleuchtungslichts 303 ist es möglich, etwa einen Millimeter unter die Oberfläche des Fingers 301 zu "sehen". Hierdurch können Attrappen identifizierbar werden, wie etwa Dünnschicht-Nachbildungen aus Holzleim oder Gelatine sowie Objekte, die grundsätzlich andere Strukturen als der Finger 301 aufweisen, beispielsweise Alginat, Gelatine oder Gummi.

### Bezugszeichenliste

- 100: Authentifikationsvorrichtung
- 101: Beleuchtungsquelle
- 103: Detektor
- 105: Prozessor

- 200: Verfahren
- 201: Beleuchten
- 203: Detektieren
- 205: Authentifizieren

- 300: Anordnung
- 301: Finger
- 303: Beleuchtungslicht
- 305: Lichtstrahl
- 307: Speckle

## Patentansprüche

1. Authentifikationsvorrichtung (100) zum Authentifizieren einer Person, mit:
einer Beleuchtungsquelle (101), welche ausgebildet ist, einen Hautbereich der Person mit einem Beleuchtungslicht (303) in einem vorbestimmten Wellenlängenbereich zu beleuchten, in welchem das Beleuchtungslicht (303) zumindest teilweise in den Hautbereich eindringt, wobei der vorbestimmte Wellenlängenbereich ein Wellenlängenbereich im Infrarot ist;
einem Detektor (103) zum Detektieren eines Detektionsbildes des Hautbereichs in dem vorbestimmten Wellenlängenbereich; und
einem Prozessor (105) zum Authentifizieren der Person auf der Basis des Detektionsbildes,
wobei der Detektor (103) ausgebildet ist, in dem Detektionsbild ein Muster zu detektieren, um die Person zu authentifizieren, wobei der Prozessor (105) ausgebildet ist, das detektierte Muster mit einem Referenzmuster zu vergleichen, um die Person zu authentifizieren,
wobei die Authentifikationsvorrichtung (100) eine Karten-Authentifikationsvorrichtung ist und einen Kartenkörper umfasst, in welchem die Beleuchtungsquelle (101), der Detektor (103) und der Prozessor (105) integriert sind;
**dadurch gekennzeichnet, dass**
der vorbestimmte Wellenlängenbereich ein Wellenlängenbereich im nahen Infrarot ist,
die Authentifikationsvorrichtung (100) eine Positionierungseinrichtung zur Positionierung des Hautbereichs der Person aufweist,
das detektierte Muster ein Specklemuster ist und
das Referenzmuster ein Referenz-Specklemuster ist.

2. Authentifikationsvorrichtung (100) nach Anspruch 1, wobei der Hautbereich der Person einem Finger (301) der Person zugeordnet ist, und wobei die Positionierungseinrichtung eine Fingerauflage ist.

3. Authentifikationsvorrichtung (100) nach einem der vorstehenden Ansprüche, wobei die Beleuchtungsquelle (101) ausgebildet ist, den Hautbereich entlang eines vorbestimmten Beleuchtungspfades oder entlang einer Mehrzahl von vorbestimmten Beleuchtungspfaden zu beleuchten, wobei der vorbestimmte Beleuchtungspfad oder die Mehrzahl von vorbestimmten Beleuchtungspfaden einen Pfad oder eine Mehrzahl von Pfaden auf dem Hautbereich umfasst.

4. Authentifikationsvorrichtung (100) nach einem der vorstehenden Ansprüche, wobei die Beleuchtungsquelle (101) einen Infrarot-Laser oder eine Infrarot-Laserdiode zum Erzeugen des Beleuchtungslichts (303) aufweist.

5. Authentifikationsvorrichtung (100) nach einem der vorstehenden Ansprüche, wobei das Referenzmuster der Person zugeordnet ist.

6. Authentifikationsvorrichtung (100) nach einem der vorstehenden Ansprüche, wobei der Detektor (103) eine Mehrzahl von Detektionselementen aufweist, und wobei der Prozessor (105) ausgebildet ist, zumindest einen Bereich des Detektionsbildes einem oder mehreren Detektionselementen zuzuordnen, um eine Information über einen Ort des Bereichs des Detektionsbildes zu erhalten.

7. Authentifikationsvorrichtung (100) nach einem der vorstehenden Ansprüche, wobei der Detektor (103) ein Zeilendetektor, ein Linsen-Array-Detektor oder ein CCD-Detektor, ist.

8. Authentifikationsvorrichtung (100) nach einem der vorstehenden Ansprüche, wobei der Kartenkörper einen Kunststoff-Kartenkörper umfasst, in welchem die Beleuchtungsquelle (101), der Detektor (103) und der Prozessor (105) integriert sind.

9. Verfahren (200) zum Authentifizieren einer Person mit einer Kartenauthentifikationsvorrichtung, die einen Kartenkörper umfasst, in welchem eine Beleuchtungsquelle (101), ein Detektor (103) und ein Prozessor (105) integriert sind, Positionieren eines Hautbereichs der Person mittels der Positionierungseinrichtung; Beleuchten (201) des Hautbereichs der Person mit einem Beleuchtungslicht (303) in einem vorbestimmten Wellenlängenbereich, in welchem das Beleuchtungslicht (303) zumindest teilweise in den Hautbereich eindringt, wobei der vorbestimmte Wellenlängenbereich ein Wellenlängenbereich im Infrarot ist:
Detektieren (203) eines Detektionsbildes des Hautbereichs in dem vorbestimmten Wellenlängenbereich; und
Authentifizieren (205) der Person auf der Basis des Detektionsbildes,
wobei in dem Detektionsbild ein Muster detektiert wird, um die Person zu authentifizieren,
wobei das detektierte Muster mit einem Referenzmuster verglichen wird, um die Person zu authentifizieren,
**dadurch gekennzeichnet, dass**
die Kartenauthentifikationsvorrichtung ferner eine Positionierungseinrichtung aufweist,
der vorbestimmte Wellenlängenbereich ein Wellenlängenbereich im nahen Infrarot ist,
das detektierte Muster ein Specklemuster ist und das Referenzmuster ein Referenz-Specklemuster ist.

10. Verfahren (200) nach Anspruch 9, wobei der Hautbereich der Person entlang eines vorbestimmten Beleuchtungspfades oder entlang einer Mehrzahl von vorbestimmten Beleuchtungspfaden beleuchtet wird, wobei der vorbestimmte Beleuchtungspfad oder die Mehrzahl von vorbestimmten Beleuchtungspfaden einen Pfad oder eine Mehrzahl von Pfaden auf dem Hautbereich umfasst.

11. Verwendung der Authentifikationsvorrichtung (100) nach einem der Ansprüche 1 bis 8, um eine Attrappe von einer Person zu unterscheiden.

## Claims

1. Authentication device (100) for authenticating a person, comprising:
an illumination source (101), which is configured to illuminate a skin area of the person with an illumination light (303) in a predetermined wavelength range, in which the illumination light (303) at least partially penetrates the skin area, wherein the predetermined wavelength range is a wavelength range in the infrared;
a detector (103) for detecting a detection image of the skin area in the predetermined wavelength range; and
a processor (105) for authenticating the person based on the detection image,
wherein the detector (103) is configured to detect a pattern in the detection image to authenticate the person, wherein the processor (105) is configured to compare the detected pattern with a reference pattern to authenticate the person,
wherein the authentication device (100) is a card authentication device and comprises a card body in which the illumination source (101), the detector (103) and the processor (105) are integrated;
**characterized in that**
the predetermined wavelength range is a wavelength range in the near infrared,
the authentication device (100) has a positioning device for positioning the skin area of the person,
the detected pattern is a speckle pattern and
the reference pattern is a reference speckle pattern.

2. Authentication device (100) according to claim 1, wherein the skin area of the person is associated with a finger (301) of the person, and wherein the positioning device is a finger rest.

3. Authentication device (100) according to one of the preceding claims, wherein the illumination source (101) is configured to illuminate the skin area along a predetermined illumination path or along a plurality of predetermined illumination paths, wherein the predetermined illumination path or the plurality of predetermined illumination paths comprises one path or a plurality of paths on the skin area.

4. Authentication device (100) according to one of the preceding claims, wherein the illumination source (101) comprises an infrared laser or an infrared laser diode for generating the illumination light (303).

5. Authentication device (100) according to one of the preceding claims, wherein the reference pattern is assigned to the person.

6. Authentication device (100) according to one of the preceding claims, wherein the detector (103) has a plurality of detection elements, and wherein the processor (105) is designed to assign at least one area of the detection image to one or more detection elements in order to obtain information about a location of the area of the detection image.

7. Authentication device (100) according to one of the preceding claims, wherein the detector (103) is a line detector, a lens array detector or a CCD detector.

8. Authentication device (100) according to one of the preceding claims, wherein the card body comprises a plastic card body, in which the illumination source (101), the detector (103) and the processor (105) are integrated.

9. Method (200) for authenticating a person with a card authentication device comprising a card body in which an illumination source (101), a detector (103) and a processor (105) are integrated, comprising:
positioning a skin area of the person using the positioning device;
illuminating (201) the skin area of the person with an illuminating light (303) in a predetermined wavelength range in which the illuminating light (303) at least partially penetrates the skin area, wherein the predetermined wavelength range is a wavelength range in the infrared;
detecting (203) a detection image of the skin area in the predetermined wavelength range; and
authenticating (205) the person based on the detection image,
wherein a pattern is detected in the detection image to authenticate the person, wherein the detected pattern is compared with a reference pattern to authenticate the person,
**characterized in that**
the card authentication device further comprises a positioning device for positioning the skin area of the person,
the predetermined wavelength range is a wavelength range in the near infrared,
the detected pattern is a speckle pattern and
the reference pattern is a reference speckle pattern.

10. Method (200) of claim 9, wherein the skin area of the person is illuminated along a predetermined illumination path or along a plurality of predetermined illumination paths, wherein the predetermined illumination path or the plurality of predetermined illumination paths comprises one path or a plurality of paths on the skin area.

11. Use of the authentication device (100) according to one of claims 1 to 8 to distinguish a dummy from a person.

## Revendications

1. Dispositif d'authentification (100) pour authentifier une personne, comprenant :
une source d'éclairage (101), qui est configurée pour éclairer une zone de peau de la personne avec une lumière d'éclairage (303) dans une plage de longueurs d'onde prédéterminée, dans laquelle la lumière d'éclairage (303) pénètre au moins partiellement la zone de peau, la plage de longueurs d'onde prédéterminée étant une plage de longueurs d'onde dans l'infrarouge ;
un détecteur (103) pour détecter une image de détection de la zone cutanée dans la plage de longueurs d'onde prédéterminée ; et
un processeur (105) pour authentifier la personne sur la base de l'image de détection,
dans lequel le détecteur (103) est configuré pour détecter un motif dans l'image de détection pour authentifier la personne, dans lequel le processeur (105) est configuré pour comparer le motif détecté avec un motif de référence pour authentifier la personne,
dans lequel le dispositif d'authentification (100) est un dispositif d'authentification de carte et comprend un corps de carte dans lequel la source d'éclairage (101), le détecteur (103) et le processeur (105) sont intégrés ;
**caractérisé en ce que**
la plage de longueurs d'onde prédéterminée est une plage de longueurs d'onde dans le proche infrarouge,
le dispositif d'authentification (100) comporte un dispositif de positionnement pour positionner la zone cutanée de la personne,
le motif détecté est un motif moucheté et
le motif de référence est un motif moucheté de référence.

2. Dispositif d'authentification (100) selon la revendication 1, dans lequel la zone cutanée de la personne est associée à un doigt (301) de la personne, et dans lequel le dispositif de positionnement est un repose-doigt.

3. Dispositif d'authentification (100) selon l'une des revendications précédentes, dans lequel la source d'éclairage (101) est configurée pour éclairer la zone de peau le long d'un trajet d'éclairage prédéterminé ou le long d'une pluralité de trajets d'éclairage prédéterminés, le trajet d'éclairage prédéterminé ou la pluralité de trajets d'éclairage prédéterminés comprenant un trajet ou une pluralité de trajets sur la zone de peau.

4. Dispositif d'authentification (100) selon l'une des revendications précédentes, dans lequel la source d'éclairage (101) comprend un laser infrarouge ou une diode laser infrarouge pour générer la lumière d'éclairage (303).

5. Dispositif d'authentification (100) selon l'une des revendications précédentes, dans lequel le motif de référence est attribué à la personne.

6. Dispositif d'authentification (100) selon l'une des revendications précédentes, dans lequel le détecteur (103) comporte une pluralité d'éléments de détection, et dans lequel le processeur (105) est conçu pour attribuer au moins une zone de l'image de détection à un ou plusieurs éléments de détection afin d'obtenir des informations sur un emplacement de la zone de l'image de détection.

7. Dispositif d'authentification (100) selon l'une des revendications précédentes, dans lequel le détecteur (103) est un détecteur de ligne, un détecteur à réseau de lentilles ou un détecteur CCD.

8. Dispositif d'authentification (100) selon l'une des revendications précédentes, dans lequel le corps de carte comprend un corps de carte en plastique, dans lequel la source d'éclairage (101), le détecteur (103) et le processeur (105) sont intégrés.

9. Procédé (200) d'authentification d'une personne à l'aide d'un dispositif d'authentification par carte comprenant un corps de carte dans lequel sont intégrés une source d'éclairage (101), un détecteur (103) et un processeur (105), comprenant :
positionnement d'une zone cutanée de la personne à l'aide du dispositif de positionnement ;
éclairer (201) la zone de peau de la personne avec une lumière d'éclairage (303) dans une plage de longueurs d'onde prédéterminée dans laquelle la lumière d'éclairage (303) pénètre au moins partiellement la zone de peau, la plage de longueurs d'onde prédéterminée étant une plage de longueurs d'onde dans l'infrarouge ;
détecter (203) une image de détection de la zone cutanée dans la plage de longueurs d'onde prédéterminée ; et
authentifier (205) la personne sur la base de l'image de détection,
dans lequel un motif est détecté dans l'image de détection pour authentifier la personne, dans lequel le motif détecté est comparé à un motif de référence pour authentifier la personne,
**caractérisé en ce que**
le dispositif d'authentification de carte comprend en outre un dispositif de positionnement pour positionner la zone cutanée de la personne,
la plage de longueurs d'onde prédéterminée est une plage de longueurs d'onde dans le proche infrarouge,
le motif détecté est un motif moucheté et
le motif de référence est un motif moucheté de référence.

10. Procédé (200) selon la revendication 9, dans lequel la zone de peau de la personne est éclairée le long d'un trajet d'éclairage prédéterminé ou le long d'une pluralité de trajets d'éclairage prédéterminés, le trajet d'éclairage prédéterminé ou la pluralité de trajets d'éclairage prédéterminés comprenant un trajet ou une pluralité de trajets sur la zone de peau.

11. Utilisation du dispositif d'authentification (100) selon l'une des revendications 1 à 8 pour distinguer un mannequin d'une personne.
